# FASCICULE DE BREVET EUROPEEN

(11) **EP 1 279 247 B1**
(45) Date de publication et mention de la délivrance du brevet: **28.11.2007**
(21) Numéro de dépôt: 01928007.2
(22) Date de dépôt: 19.04.2001
(51) Int. Cl.: H04J 14/02, H04L 25/03

(54) **SYSTEME DE TRANSMISSION OPTIQUE A MULTIPLEXAGE EN LONGUEUR D'ONDE**
OPTISCHES WELLENLÄNGENÜBERTRAGUNGSSYSTEM
WAVELENGTH-DIVISION MULTIPLEXING OPTICAL TRANSMISSION SYSTEM

(30) Priorité: 20.04.2000 FR 0005104
(43) Date de publication de la demande: 29.01.2003
(73) Titulaire: Corvis France R & D, 35760 Saint Grégoire (FR)
(72) Inventeur: GEORGES, Thierry, F-22700 Perros Guirec (FR); PAMART, Jean-Luc, F-22300 Lannion (FR)
(74) Mandataire: Callon de Lamarck, Jean-Robert
(86) Numéro de dépôt international: PCT/FR2001/001208
(87) Numéro de publication internationale: WO 2001/082515

(56) Documents cités:
- EP-A- 0 691 759
- US-A- 5 491 575
- US-A- 6 025 944
- HILL G R ET AL: "A TRANSPORT NETWORK LAYER BASED ON OPTICAL NETWORK ELEMENTS" JOURNAL OF LIGHTWAVE TECHNOLOGY,IEEE. NEW YORK,US, vol. 11, no. 5/06, 1 mai 1993 (1993-05-01), pages 667-676, XP000396700 ISSN: 0733-8724 cité dans la demande
- MARTEN P: "OPTISCHE SENDER MIT HALBLEITERLASERN FUER HOHE BITRATEN" ELEKTRONIK,FRANZIS VERLAG GMBH. MUNCHEN,DE, vol. 31, no. 22, 1 novembre 1982 (1982-11-01), pages 89-94, XP000711635 ISSN: 0013-5658
- MANCHESTER J ET AL: "IP OVER SONET" IEEE COMMUNICATIONS MAGAZINE, US, IEEE SERVICE CENTER. PISCATAWAY, N.J, vol. 36, no. 5, 1 mai 1998 (1998-05-01), pages 136-142, XP000752858 ISSN: 0163-6804
- PATENT ABSTRACTS OF JAPAN vol. 1995, no. 04, 31 mai 1995 (1995-05-31) & JP 07 015411 A (MATSUSHITA ELECTRIC IND CO LTD), 17 janvier 1995 (1995-01-17)

## Description

La présente invention est relative à un système de transmission optique à multiplexage en longueur d'onde.

Elle trouve en particulier avantageusement application dans le cas de systèmes destinés à des applications terrestres, c'est à dire destinés à assurer des transmissions sur des distances inférieures à 4 000 kms.

Il est connu de mettre en oeuvre sur des signaux multiplexés en longueur d'onde des sur-modulations d'amplitude - appelées « pilot tones » selon la terminologie anglo-saxonne classiquement utilisée par l'homme du métier - qui permettent de gérer, tout au long d'une ligne de transmission, la puissance des signaux correspondant aux différents canaux, et ce sans avoir à réaliser d'opérations de démultiplexage.

A cet effet, il est attribué à chaque canal une fréquence à laquelle les signaux de la bande optique correspondant à ce canal sont sur-modulés. Des données à faible débit peuvent être transmises par la sur-modulation.

Le document EP0691759 décrit ainsi un réseau de communication basé sur le mode de transfert asynchrone où le spectre des fréquences du réseau est divisé en bandes de fréquences, chaque bande étant alors utilisée pour des communications distinctes.

Des moyens aptes à commander des amplificateurs régulièrement répartis sur la ligne de transmission dérivent en entrée desdits amplificateurs une petite partie du signal transmis et la filtrent à ces différentes fréquences de sur-modulation. Ils commandent les amplificateurs en fonction des différents niveaux de puissance obtenus en sortie de ce filtrage, afin de corriger les éventuels écarts de puissance de transmission entre les différents canaux.

Egalement, il peut être prévu des moyens dits de préaccentuation qui, au niveau de la ou des sources d'émission et des moyens de multiplexage, modifient les puissances individuelles des différents canaux pour égaliser les performances de ceux-ci.

Une utilisation de ces sur-modulations d'amplitude ou « pilot tones » est par exemple présentée dans la publication :

Généralement, les fréquences utilisées pour des sur-modulations d'amplitude ou « pilot tones » sont comprises entre 5 Khz et 100 Khz.

L'utilisation de fréquences élevées, supérieures à 100 kHz, est en effet normalement proscrite, dans la mesure où ces fréquences peuvent être présentes dans le spectre du signal transmis.

Quant aux fréquences faibles (fréquences inférieures à 1 kHz), les sur- modulations à ces fréquences sont susceptibles d'être reproduites sur les signaux obtenus après filtrage et de commander en conséquence le gain des amplificateurs. Une fréquence de contrôle associée à un canal de longueur d'onde donnée module alors les autres canaux de longueur d'onde et se trouve par conséquent empêchée de jouer correctement sa fonction de contrôle.

Pour des fréquences supérieures (10 Khz et au-delà), les fréquences de sur- modulation se trouvent recopiées (en quadrature de phase) sur les signaux des canaux autres que celui auquel elles sont théoriquement associées. Cet effet de recopie, s'il est présent à chaque amplificateur, a une efficacité qui diminue avec la fréquence (en 1/f²).

Toutefois, notamment lorsque le nombre d'amplificateurs augmente et que le nombre de canaux oblige à travailler avec des fréquences se rapprochant plus de 10 kHz que de 100 kHZ, il est possible que la somme des densités de puissance, pour une fréquence de sur-modulation fₖ donnée, sur les signaux aux longueurs d'onde λⱼ (j≠k) soit du même ordre de grandeur que la densité de puissance à la fréquence fₖ à la longueur d'onde λₖ, voire même supérieure à celle-ci. La fréquence fₖ est alors présente dans l'ensemble des signaux multiplexés et il n'est plus possible de mesurer la puissance du signal du canal correspondant à la longueur d'onde λₖ.

Un but de l'invention est de résoudre les problèmes posés par cet effet de recopie.

A cet effet, l'invention propose un système de transmission optique à multiplexage en longueur d'onde comportant des moyens d'émission, des moyens de réception et une ligne de transmission optique sur laquelle est répartie une pluralité d'amplificateurs, les moyens d'émission comportant des moyens pour la génération de sur- modulations de contrôle, caractérisé en ce que les moyens d'émission comportent des moyens pour l'embrouillage du signal transmis sur une bande de fréquence donnée et en ce que les fréquences des sur - modulations de contrôle sont comprises dans ladite bande.

De cette façon, on utilise pour la génération des sur -modulations des fréquences importantes, pour lesquelles l'effet de recopie est réduit.

Notamment, pour les cas de débits de transmission correspondant à ceux précédemment évoqués :
- la bande de fréquence embrouillée est préférentiellement au delà de 100 kHz. ;
- notamment, elle est avantageusement en deçà de 10 MHz ;
- en particulier, elle est préférentiellement comprise entre 1 et 10 Mhz.

L'invention concerne en outre un dispositif d'émission pour un système de transmission optique du type précité.

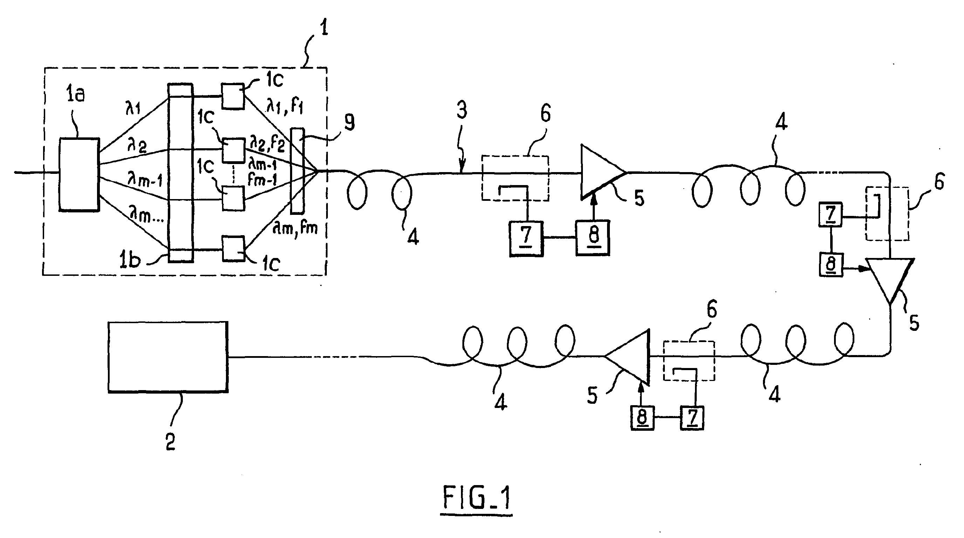

D'autres caractéristiques et avantages de l'invention ressortiront encore de la description qui suit, laquelle est purement illustrative et non limitative et doit être lue en regard de la figure unique annexée sur laquelle on a représenté schématiquement un système de transmission optique sur lequel un procédé conforme à l'invention peut être mis en oeuvre.

Le système de transmission représenté sur cette figure comporte des moyens émetteurs 1, des moyens récepteurs 2 et une ligne de transmission 3 qui est par exemple une ligne de transmission terrestre et qui s'étend entre lesdits moyens émetteurs et récepteurs 1 et 2.

Les moyens émetteurs 1 et les moyens récepteurs 2 comportent des moyens de multiplexage/démultiplexage qui permettent de transmettre simultanément sur la ligne 3 plusieurs canaux correspondant à différentes longueurs d'onde de transmission.

Les moyens émetteurs 1 comportent d'une part des moyens 1 a qui assurent la conversion de signaux électriques reçus en des signaux optiques, notamment en des signaux à modulation NRZ.

Ils comportent en outre des moyens 1b d'embrouillage qui permettent de débarrasser le signal de son énergie dans une bande de fréquence en partie basse du spectre occupé par le signal converti.

Les moyens d'embrouillage sont en eux-mêmes connus. Ils consistent en des moyens permettant d'ajouter dans la chaîne codée des 0 ou 1 binaires de façon à rendre pseudo-aléatoires les composantes de fréquences lentes du signal.

Ils comportent par ailleurs des moyens 1c pour générer sur chacun des canaux des sur-modulations de contrôle (« pilot tones »), avec une fréquence de sur- modulation propre pour chacun des canaux, les fréquences de sur-modulations ainsi générées étant comprises dans la bande de fréquence embrouillée.

A titre d'exemple correspondant à un mode de réalisation et de mise en oeuvre préféré, pour un débit de 10 Gbits/s par canal, on utilise des moyens d'embrouillage permettant de brouiller tout signal aux fréquences inférieures à 10 MHz.

Notamment, de façon particulièrement préférentielle, on réserve aux sur - modulations de contrôle la plage comprise entre 1 MHz et 10 MHz.

La ligne 3 comporte quant à elle plusieurs sections 4 de fibre optique entre lesquelles sont interposés des amplificateurs 5.

Elle comporte en amont de chaque amplificateur 5 :
- des moyens 6 (coupleurs optiques par exemple) qui permettent de dériver une petite partie du signal transmis sur la ligne 3 ,
- des moyens 7 qui permettent de filtrer cette dérivation du signal transmis pour chacune des fréquences de sur-modulation,
- des moyens 8 qui permettent de commander l'amplificateur 5 pour rattraper un éventuel décalage de puissance de transmission entre les puissances transmises par exemple par variation de puissance de pompe des amplificateurs, ou encore atténuation variable et commandable.

Il est également prévu au niveau des moyens de multiplexage des moyens émetteurs et des moyens 9 qui, en fonction d'un retour transmis par les moyens 7, permettent une modification de la puissance d'émission individuelle des différents canaux (pré-accentuation) pour égaliser les performances (taux d'erreur) des différents canaux. Ces moyens 9 sont par exemple des alternateurs variables.

## Revendications

1. Dispositif d'émission (1) pour un système de transmission optique à multiplexage en longueur d'onde comportant des moyens pour la génération de sur-modulations de contrôle (1c), **caractérisé en ce qu'**il comporte des moyens pour l'embrouillage (1b) du signal transmis sur une bande de fréquence donnée et **en ce que** les fréquences des sur-modulations de contrôle sont comprises dans ladite bande.

2. Dispositif selon la revendication 1, **caractérisé en ce qu'**il comporte des moyens de préaccentuation (7, 9).

3. Dispositif selon l'une des revendications 1 ou 2, **caractérisé en ce que** la bande de fréquence embrouillée est au delà de 100 kHz.

4. Dispositif selon l'une des revendications 1 ou 2, **caractérisé en ce que** la bande de fréquence embrouillée est en deçà de 10 MHz.

5. Dispositif selon la revendication 1, **caractérisé en ce que** la bande de fréquence embrouillée est comprise entre 1 et 10MHz.

6. Système de transmission optique à multiplexage en longueur d'onde comportant un dispositif d'émission (1), des moyens de réception (2) et une ligne de transmission optique (3) sur laquelle est répartie une pluralité d'amplificateurs (5), le dispositif d'émission (1) étant conforme à l'une quelconque des revendications 1, 2, 3, 4 et 5.

## Claims

1. Emission device (1) for a wavelength-division multiplexing optical transmission system comprising means for generating control over-modulations (1c), **characterized in that** it comprises means for scrambling (1b) the signal transmitted on a given frequency band and **in that** the frequencies of the control over-modulations lie in said band.

2. Device according to Claim 1, **characterized in that** it comprises preemphasis means (7,9).

3. Device according to one of Claims 1 or 2, **characterized in that** the scrambled frequency band is above 100 kHz.

4. Device according to one of Claims 1 or 2, **characterized in that** the scrambled frequency band is below 10 MHz.

5. Device according to Claim 1, **characterized in that** the scrambled frequency band lies between 1 and 10 MHz.

6. Wavelength-division multiplexing optical transmission system comprising an emission device (1), reception means (2) and an optical transmission line (3) over which is distributed a plurality of amplifiers (5), the emission device (1) being in accordance with any one of Claims 1, 2, 3, 4 and 5.

## Patentansprüche

1. Sendevorrichtung (1) für ein optisches Übertragungssystem mit Wellenlängen-Multiplexing, die Mittel zum Erzeugen von Modulationen zur Steuerung (1c) umfaßt, **dadurch gekennzeichnet, daß** sie Mittel zum Verändern (1b) des in einem gegebenen Frequenzband übertragenen Signals umfaßt und dadurch, daß die Frequenzen der Steuerungsmodulationen in diesem Band liegen.

2. Vorrichtung nach Anspruch 1, **dadurch gekennzeichnet, daß** sie Mittel zur vorgeschalteten Pegelanpassung (7, 9) umfaßt.

3. Vorrichtung nach einem der Ansprüche 1 oder 2, **dadurch gekennzeichnet, daß** das veränderte Frequenzband oberhalb von 100 kHz liegt.

4. Vorrichtung nach einem der Ansprüche 1 oder 2, **dadurch gekennzeichnet, daß** das veränderte Frequenzband unterhalb von 10 MHz liegt.

5. Vorrichtung nach Anspruch 1, **dadurch gekennzeichnet, daß** das veränderte Frequenzband zwischen 1 und 10 MHz liegt.

6. Optisches Übertragungssystem mit Wellenlängen-Multiplexing umfassend: eine Sendevorrichtung (1), Empfangsmittel (2) und eine optische Übertragungsleitung (3), auf der mehrere Verstärker (5) verteilt sind, wobei die Sendevorrichtung (1) gemäß einem der Ansprüche 1, 2, 3, 4 und 5 realisiert ist.
